# EUROPEAN PATENT SPECIFICATION

(11) **EP 4 344 543 B1**
(45) Date of publication and mention of the grant of the patent: **05.08.2026**
(21) Application number: 23200768.2
(22) Date of filing: 29.09.2023
(51) Int. Cl.: A01N 1/143

(54) **DEVICE FOR THE STORAGE AND PRESERVATION OF AN ORGAN TO BE PERFUSED WITH AN EX VIVO PERFUSION SYSTEM**
VORRICHTUNG ZUR LAGERUNG UND KONSERVIERUNG EINES MIT EINEM EX-VIVO-PERFUSIONSSYSTEM ZU PERFUNDIERENDEN ORGANS
DISPOSITIF DE STOCKAGE ET DE CONSERVATION D'UN ORGANE A PERFUSER AVEC UN SYSTEME DE PERFUSION EX VIVO

(30) Priority: 30.09.2022 IT 202200020187
(43) Date of publication of application: 03.04.2024
(73) Proprietor: Aferetica S.r.l., 40138 Bologna (IT)
(72) Inventor: ATTI, Mauro, 40138 Bologna (IT)
(74) Representative: Studio Torta S.p.A.

(56) References cited:
- WO-A1-2019/095079
- WO-A2-2007/124044
- GB-A- 2 587 350
- XVIVO PERFUSION AB: "XVIVO Organ Chamber(TM)", 20 May 2022 (2022-05-20), XP093038777, Retrieved from the Internet <URL:https://web.archive.org/web/20220520210532/https://www.xvivoperfusion.com/products/organ-chamber/> [retrieved on 20230412]
- NIIKAWA HIROMICHI ET AL: "The protective effect of prone lung position on ischemia-reperfusion injury and lung function in an ex vivo porcine lung model", THE JOURNAL OF THORACIC AND CARDIOVASCULAR SURGERY, vol. 157, no. 1, 1 January 2019 (2019-01-01), US, pages 425 - 433, XP093038776, ISSN: 0022-5223, DOI: 10.1016/j.jtcvs.2018.08.101

## Description

### TECHNICAL FIELD OF THE INVENTION

The present invention relates generally to the field of *ex vivo* organ transplantation, in particular the preservation of organs, in particular a lung block, to be perfused with an *ex vivo* perfusion system and transplanted into a patient.

In particular, the present invention relates to a device for the storage and preservation of an organ, in particular a lung block, to be perfused with an *ex vivo* perfusion system.

### BACKGROUND OF THE INVENTION

As is well known, in the context of certain degenerative diseases, sometimes with acute evolution, for which replacement therapy is not always possible, transplantation of the affected organ is the only possible treatment for a patient. For example, lung transplantation is the treatment of choice for patients suffering from terminal diseases, such as diseases causing reduced lung function (e.g. pulmonary emphysema, chronic obstructive pulmonary disease, COPD, cystic fibrosis, CF, idiopathic pulmonary fibrosis, IPF, and primary pulmonary hypertension, PPI), which irreversibly impair their function in the face of the inability to implement alternative pharmacological or surgical therapeutic strategies.

It is a well-known fact that, at present, organ transplantation procedures are effective and their benefits (in particular, functional restoration and quality of life) significantly outweigh the complications (in particular, rejection, infections) and their consequences.

However, to date, the main problem when performing an organ transplant concerns the difference between the number of people waiting for a transplant (i.e. on the waiting list) and the number of organs that are actually transplantable, i.e. available.

In recent years, the limited availability of organs suitable for transplantation compared to the increasing number of patients on the waiting list has led to the selection and use of organs considered critical, such as those from non-standard or marginal donors (*Expanded Criteria Donors,* ECD), e.g. organs from non-beating heart donors or from donors with a stopped heart (NHBD, *Non Heart Beating Donor* and *Donor after Circulatory Death,* DCD, respectively) that until a few years ago would have been considered unsuitable for transplantation. They are therefore considered to be high-risk organs as they have a greater likelihood of dysfunction in the immediate post-transplant period and an increased risk of loss of graft, i.e. transplant organ tissue.

According to a press release issued by the National Transplant Centre in January 2022, the number of lung transplants performed in Italy is increasing relatively steadily; in particular, 115 operations were recorded. In addition, the data show an increase in donations and transplants from donors after circulatory deaths, which represent a resource of recent use in Italy but of high marginality, since, in order to perform a transplant, Italian legislation requires a twenty-minute period, also referred to as the *no-touch period,* for ascertaining cardiac death before proceeding with the collection. Therefore, the increased use of organs from donors after circulatory death is limited both by the scarcity of available organs, especially suitable ones, and by the marked deterioration of the organ, especially in the case of organs from donors after circulatory deaths due to the aforementioned no-touch period.

Hence the need for proper storage and preservation of the organ to be transplanted; this need is confirmed by the data on transplanted organ and patient survival in Italy in 2017.

Despite the ever-increasing number of successfully performed transplants, the number of patients on the waiting list still remains high compared to the continuous demand, with an average waiting time on the list of 2.7 years for a lung transplant.

In order to compare Italian transplant activity with that in the rest of Europe and the world, the number of transplants per million population (pmp, per million population) is calculated; in particular, the largest numbers are recorded in Europe and America. Comparing transplantation activity in general, Italy shows low numbers compared to Europe and the world.

Although transplantation activity in Italy has increased over the years, as mentioned above, the difference between the number of transplants actually performed and the number of patients on the waiting list remains high. This issue has led to the pursuit of solutions to increase the number of potential transplantable organs by implementing two different strategies: increasing the pool of donors, thus including marginal donors, and/or improving the quality of the organ to be transplanted.

In particular, in order to increase the pool of donors, it is necessary to extend inclusion to organs from marginal donors too; in particular, as also mentioned above, all donors whose death is declared according to cardiac criteria, i.e. non-beating heart donors and donors after circulatory death, fall into this category. Marginal donors are typically defined as donors with comorbidities or infectious diseases (e.g. hepatitis or HIV) and, in the specific case of the lung, smokers. Despite the increase in donation consent, there have been changes in the demographics of the donor population, with an increase in donor age and associated comorbidities, leading to an increase in the proportion of marginal donors. In addition, donation after circulatory death consists of the removal of organs from a donor for whom death due to irreversible cardiocirculatory arrest (ACC) has been established.

A non-negligible issue in the transplantation of organs from non-beating-heart donors is the high percentage of post-transplant complications, resulting from the additional period of warm ischaemia that transplant organs undergo during the period of ascertainment of death. These complications are greater in Italy because of the aforementioned Italian legislation on the no-touch period; in fact, the aforementioned twenty minutes, added to the time elapsed from the moment of cardiocirculatory arrest and the time needed for the resuscitation attempt, have contributed to limiting the use of these organs, to often considering them unsuitable organs for transplantation and to including them among organs from marginal donors.

For these reasons, marginal organs are extremely vulnerable to ischaemia/reperfusion damage that affects their post-transplant functionality. It should be noted that ischaemic/reperfusion damage refers to a severe oxygen deficiency caused by reduced perfusion (i.e. blood supply to a body district), which is followed by reperfusion (i.e. restoration of normal circulation to that body district), which generally aggravates the damage caused by ischaemia. Ischaemia/reperfusion damage causes delayed functional recovery, acute rejection and chronic organ dysfunction in the organ itself. In fact, during the ischaemic phase, the cells of the leukocyte system are activated and pro-inflammatory cytokines (protein molecules produced in inflammatory frameworks) are produced, which, in association with the activation of the complement system, irreversibly damage the organ due to an uncontrolled inflammatory response, characterised by a complex pathophysiology, which can modulate transplant rejection and contribute to the failure of the procedure. Ischaemia/reperfusion damage causes more than 10% of failures in transplantation practice due to the failure to regain function of the graft added to the complications of delayed organ function. Therefore, by minimising the adverse effects of ischaemia/reperfusion damage, it is possible to have better functional recovery of the graft and consequently an increase in the survival of the recipient and the organ itself. Although ischaemia/reperfusion damage in transplantation cannot be avoided, due to the very method by which organs are harvested, allocated and distributed, it is possible to limit it thanks to the coordination of the various transplant centres, the shortening of operating times and, above all, thanks to advanced organ preservation techniques.

It should also be noted that the success of the organ transplantation procedure is mainly due to the discovery of the function played by immunosuppressive agents and the development of surgical and organ-preservation techniques, which are able to allow the preservation of the organ to be transplanted in the time between removal from the donor and subsequent transplantation into the recipient. The transplant programme is greatly benefited by the organ-preservation techniques implemented in the pre-transplant phase, which allow perfect organ preservation and minimise ischaemia/reperfusion damage.

Some known transplant organ storage techniques are now listed.

Static cold or hypothermic storage techniques are known, which involve washing and immersing the organ in a preservation solution at 4°C that allows the reduction of metabolism and related oxygen requirements. Organs preserved in this way can only be stored for a limited number of hours and are in any case subjected to a certain degree of damage, which increases the longer the cold ischaemic time is prolonged. Static cold storage is not recommended for the preservation of marginal organs because of the high risk of failure/delayed recovery of function that follows, especially for the lung, which is the organ most susceptible to ischaemia/reperfusion damage and consequent loss of function.

Preservation strategies based on organ perfusion, in particular *ex vivo* lung, (EVLP, *Ex Vivo Lung Perfusion*), originally applied in animal models and in pre-clinical and clinical settings to prevent deterioration of marginal organs and improve their functional performance, and to recover improperly discarded organs, are also known. In particular, in many circumstances, lung perfusion with EVLP can replace static storage due to the greater benefits it brings to the organ. In fact, unlike static storage, EVLP preserves and enables the lung to be preserved by means of perfusion, which imitates and mimics physiological perfusion, through its blood vessels with a solution specifically designed for this type of organ. The function performed by EVLP makes it possible to extend storage time, reduce the rate of post-transplant dysfunction and improve the condition of organs, even those from marginal donors, where simple static cold storage cannot meet the metabolic-functional needs of the organ. EVLP is conducted through the simultaneous use of an *ex vivo* perfusion system, which allows the lung to be perfused under physiological-like conditions; and a device for the storage and preservation of an organ to be perfused, hereafter also referred to for simplicity as a storage and preservation chamber, which allows the lung to be protected during EVLP.

With regard to the *ex vivo* perfusion system, the *ex vivo* perfusion and reconditioning procedure of the lung consists of the perfusion of the organ using a system capable of perfusing and thermoregulating using a perfusion fluid; in particular, following the vascularisation of the lung, the perfusion fluid is distributed in the pulmonary circulation. The operational perfusion conditions are defined in such a way as to respect the anatomo-functional characteristics of the lung and to meet the clinical and operational requirements that arise in these procedures. Specifically, the *ex vivo* perfusion of the lung is performed by selective cannulation of the pulmonary artery, from which the perfusion fluid is injected. The lung is drained via a cannula with a cuff sutured at the level of the left atrium, at the outlet of the pulmonary veins. Perfusion is conducted at physiological flows and pressures, with pressure monitoring at the tip of the cannula and using a specific extracorporeal circulation system normally used in clinical practice. In addition, together with perfusion, the *ex vivo* perfusion system is also able to ensure the correct acid-base and oxygenation balance. In particular, the *ex vivo* perfusion system comprises an oxygenator, specifically made of propylene connected to a medical gas mixer, designed to deoxygenate in order to simulate exercise and, therefore, oxygen consumption by the lung; in addition, the *ex vivo* perfusion system comprises an endotracheal ventilation tube that allows oxygenation during the perfusion procedure. The thermoregulation of the perfusion liquid is ensured by the presence of a thermoregulation system, in particular a system comprising heating and cooling units, which, connected as in clinical practice to the oxygenator, by means of heat conduction, ensures the heating of the perfusion liquid and the conduction of the EVLP under normothermic conditions (i.e. at a temperature of 37°C).

With regard to the storage and preservation chamber, this allows the organ to be protected and preserved during EVLP *ex vivo* perfusion. The storage and preservation chamber comprises a support surface for the lung and a covering cap, which is coupled to the support surface to form a space where the lung is housed under essentially sterile conditions during the *ex vivo* perfusion procedure.

In this regard, several types of storage and preservation chambers are known, e.g. the Xvivo Organ Chamber^{™} by Xvivo Perfusions, which is a sterile disposable chamber intended to be used as a temporary *ex vivo* storage container for donor lungs intended to be transplanted onto a recipient. In particular, the storage and preservation chamber is made of PETg (glycol-modified polyester), a transparent material that allows inspection of the lung throughout the *ex vivo* perfusion, and has a pair of short grooves made of TPE (thermoplastic elastomer) for positioning the perfusion cannulae. In use, the lung is placed in a pulmonary chamber container and held still during EVLP; the support surface is designed to carry the lung and is inclined at a fixed angle.

Another well-known type of storage and preservation chamber is the OCS Lungs chamber by Transmedics, which is a mobile perfusion, ventilation and monitoring system for the lung taken from a donor and intended to be transplanted onto a recipient. The integrated modules make it possible to maintain the organ in a near-physiological condition through perfusion conducted under normothermic conditions.

### OBJECT AND SUMMARY OF THE INVENTION

In light of the above observations, the Applicant observed that there is a need to improve known lung chambers to improve the storage of the lung during the *ex vivo* perfusion procedure, in particular in order to maintain its storage under physiological-like conditions; furthermore, the Applicant observed that there is also a need to be able to monitor the progress of the *ex vivo* perfusion procedure and the storage and preservation conditions of the organ to be transplanted at all stages of the perfusion procedure of the organ itself.

The purpose of the present invention is thus to solve the aforementioned problems present in the prior art by implementing a device for the storage and preservation of an organ, in particular a lung, to be perfused with an *ex vivo* perfusion system.

According to the present invention, a device is realised for the storage and preservation an organ, in particular a lung, to be perfused with an *ex vivo* perfusion system, as claimed in the appended claims.

### BRIEF DESCRIPTION OF THE DRAWINGS

Figure 1 schematically illustrates a device for the storage and preservation of an organ to be perfused with an *ex vivo* perfusion system according to an embodiment of the present invention.
Figure 2 shows a portion of the device for the storage and preservation of an organ in Figure 1 with parts removed.
Figure 3 shows a further portion of the device for the storage and preservation of an organ in Figure 1.

### DESCRIPTION OF PREFERRED EMBODIMENTS OF THE INVENTION

As further described below, the present device for the storage and preservation of an organ to be perfused with an *ex vivo* perfusion system is designed so as to allow the position of the organ to be changed during perfusion thereof; in particular, without any loss of generality, reference is hereinafter made to a lung block (i.e., explanted lungs) as an organ to be perfused and which, when housed in the present device for the storage and preservation of an organ is capable of assuming different positions so as to move from a clinostatic position (i.e., horizontal or parallel position with respect to an XY plane of an XYZ Cartesian reference system) to an orthostatic position (i.e., inclined or orthogonal position with respect to an XY plane of an XYZ Cartesian reference system).

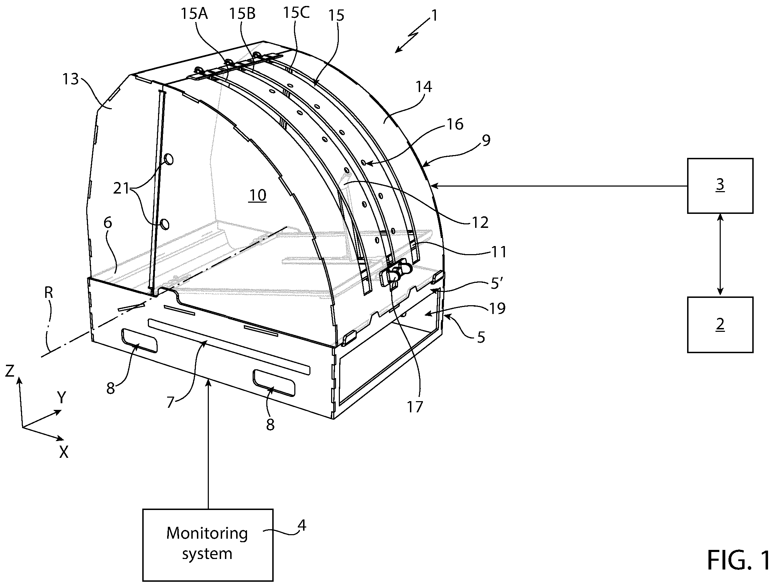

In greater detail, Figure 1 shows a device **1,** indicated for simplicity in the following and without any loss of generality as a chamber **1,** for the containment and preservation of an organ (herein a lung block) to be perfused with an *ex vivo* perfusion system **2;** in particular, the *ex vivo* perfusion system **2** comprises a perfusion circuit **3** for perfusing the organ designed to be connectable to the organ, particularly when the *ex vivo* perfusion system **2** is in use. In addition, the device **1** can be coupled to a monitoring system **4,** e.g. a pulmonary microdialysis system, designed to monitor organ status during *ex vivo* perfusion.

By way of example, the monitoring system **4** comprises at least one probe, which is inserted, in use, into the lung parenchyma via an introduction system, which is also part of the monitoring system **4** and can be separated from the probe when the latter is inserted into the lungs. The monitoring system **4** allows metabolites from the lungs to be monitored by taking parenchymal interstitial fluid. According to an aspect of the present invention, the probe is a temperature probe, in particular a thermographic probe, which enables parameters relating to the regional distribution of perfusion to be determined on the basis of heat maps, the latter being determined by a processing unit (not shown) of the monitoring system **4** on the basis of data transmitted by the probe and generated on the basis of quantities (here, temperature) acquired by the probe. Therefore, the monitoring system **4** is designed to monitor metabolites from the lungs by taking parenchymal interstitial fluid on the basis of the above heat maps, generated on the basis of the detection by the temperature probe.

The chamber **1** comprises a base **5.** According to an aspect of the present invention, the base **5** is designed to be connectable to discharge means (not shown) of the *ex vivo* perfusion system **2,** in particular through connection means (not shown) as described in detail below.

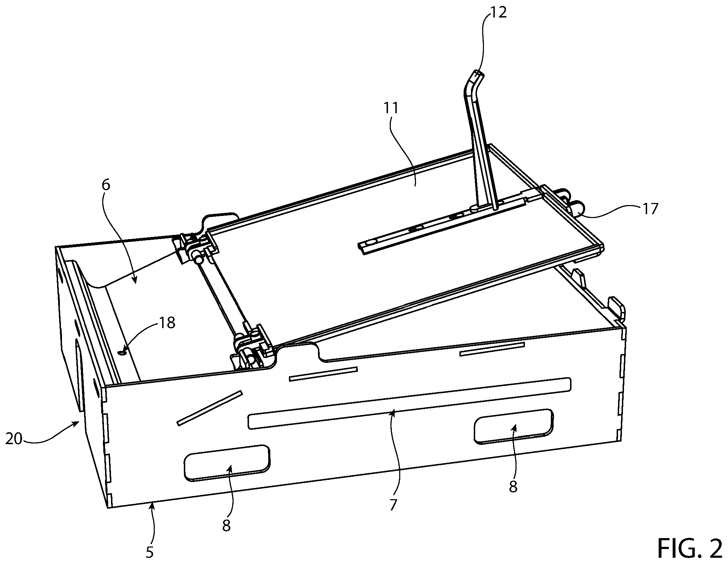

With joint reference to Figures 1-3, the base **5** comprises a basin **6** for collecting drainage fluid (e.g. perfusion fluid exiting the lung block through the lung parenchyma).

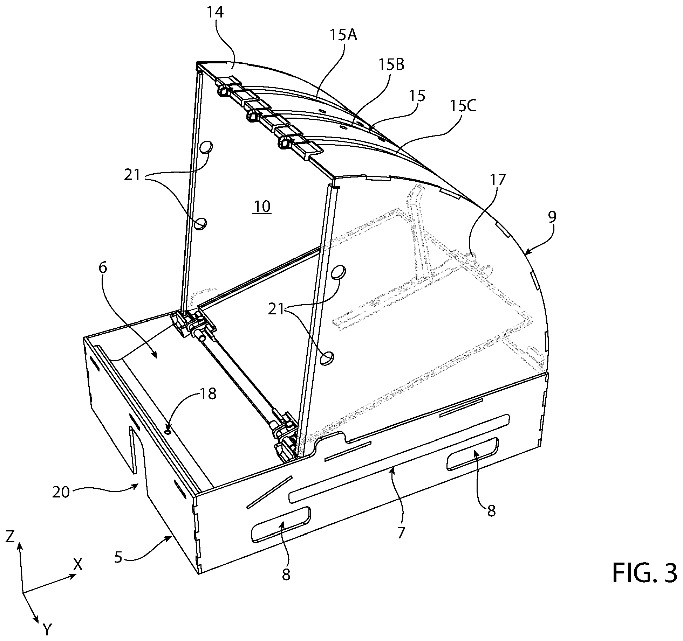

As shown in Figure 3, the basin **6** has a hole **18,** crossing the thickness of the basin **6,** arranged in the vicinity of a recess **20** formed in the base **5** and designed to allow the connection of a drain pipe (not shown) for the discharge of drainage liquids into the basin **6.** In particular, according to an aspect of the present invention, the drain pipe is inserted into the recess **20** and coupled to the hole **18** so that the drainage liquids in the tank **6** flow into the hole **18** and, thus, into the drain pipe, the latter being connected to the drain means. In practice, the drain pipe is placed below the basin **6.**

The base **5** also comprises, as shown in Figures 1-4, a slot, referred to hereafter as slot **7,** designed to receive an X-ray investigation system (e.g., an X-ray film). According to a further aspect of the present invention, not shown and described herein in detail, the base **5** is devoid of the slot **7** and the radiological investigation system is received by an opening **19** formed at a surface **5'** of the base **5** extending parallel to a plane YZ of the XYZ Cartesian reference system, i.e. along the short side of the base **5.**

The presence of the slot **7** or the opening **19** allows for advanced diagnostic investigations that assess the clinical status of the lung block during the perfusion procedure. In particular, the diagnostic investigations comprise:
- assessment of lung function at the interstitial level;
- assessment of the presence of pulmonary oedema;
- identification of sites affected by small inflammation processes that are unknown and/or of unknown origin;
- presence of consolidations; and
- presence of pulmonary congestion.

In addition, the presence of the slot **7** or the opening **19** is advantageously used to perform diagnostic investigations at close range, as this allows the elimination of the "barrier" due to the presence of bone and soft tissue (physiologically present during the X-ray of the lung block *in situ*)*,* improving the quality of the radiographic finding and optionally allowing the detection of otherwise obscured and/or artefactual elements, such as any of the above (pulmonary oedema, inflammation, etc.).

The base **5** is also provided with handles **8** for transporting the lung block, placed in the chamber **1,** before or after the perfusion procedure.

The chamber **1** further comprises a cover element, also referred to in the following as a cover cap, **9** which can be coupled to the base **5** and defines a space **10** with the base **5;** in particular, the basin **6** is arranged in the space **10.** According to an aspect of the present invention, the base **5** is profiled in such a manner as to ensure a watertight seal with the cover cap **9** to prevent the escape of drainage liquids, which are conveyed and collected in the basin **6.** In addition, when the organ is housed in the device **1,** the cover cap **9** is designed to allow the connection of the organ housed in the space **10** with the *ex vivo* perfusion system **2** through appropriate connection means, as explained in more detail below.

The chamber **1** further comprises a support surface **11** housed in the space **10** defined by the cover cap **9** and the base **5.** In addition, the support surface **11** is designed to carry the lung block, particularly during the *ex vivo* perfusion procedure by the perfusion circuit **3** of the ex *vivo* perfusion system **2.** In more detail, the support surface **11** is movably carried by the base **5** to rotate around an axis **R** perpendicular to a transverse direction, in particular longitudinal, i.e. along a main extension direction (here parallel to an X axis of the XYZ Cartesian reference system) parallel to the longitudinal direction of the support surface **11** so that it can be inclined relative to the base **5.** In particular, according to an aspect of the present invention, the axis **R** extends parallel to the short side of the support surface **11,** here parallel to a Y axis of the XYZ Cartesian reference system. According to a preferred aspect of the present invention, described below and without any loss of generality, the support surface **11** is movably carried by the cover cap **9.**

The support surface **11** is also designed to be able to be inclined at inclinations comprised between 0° and 65° relative to the base **5** so as to allow the organ carried by the support surface **11** to move from the clinostatic position (i.e., from a horizontal position, inclined at 0° relative to the base **5)** to the orthostatic position (i.e., to an inclined position comprised between 60° and 65°, orthogonal relative to the base **5).**

The support surface **11** is also provided with a support hook **12** for the lung block to be perfused, in particular for the tracheal carina of the lung block to be perfused.

The support surface **11** is made of biocompatible and radiolucent material, particularly polycarbonate, to allow monitoring of the lung block at any stage of the *ex vivo* perfusion procedure. The choice of such a material allows direct contact with the lung block without it being negatively and significantly affected by the support surface **11** and to maintain an ideal environment for *ex vivo* perfusion. Moreover, the fact that it is radiolucent makes it possible to carry out radiological investigations during the *ex vivo* perfusion procedure of the lung block, for example by placing an X-ray in the slot **7** or in the opening **19** of the base **5,** in order to perform the aforementioned diagnostic investigations to assess various clinical-functional aspects in relation to its transplantability.

It should also be noted that the presence of the hook **12** for the support of the tracheal carina allows the lung block to be positioned correctly on the support surface **11** during the *ex vivo* perfusion procedure and the position of the same to be easily modified by inclining the support surface **11** appropriately. The hook **12** is also designed in such a way as to support the lung block at the bifurcation of the trachea, at the level of the carina, in order to allow stabilisation even in an orthostatic position without causing trauma to the tissues.

The cover cap **9** comprises a front portion **13** and a rear portion **14** removably coupled together; in particular, in the present embodiment, the front portion **13** is removable and the rear portion **14** is fixed. Furthermore, according to a preferred embodiment of the present invention, the support surface **11** is hinged, in particular pivoted by means of pins (not shown), to the rear portion **14** of the cover cap **9** so that it can be inclined relative to the base **5.** Because the anterior portion **13** is removable, it is possible to perform more or less invasive manoeuvres on the lung block (e.g., direct inspection and palpation of the organ, pronation of the organ to improve the ventilation/perfusion ratio, in accordance with the West zones and due to gravity) positioned on the support surface **11** even during the perfusion procedure, thus allowing an operator to be facilitated in handling the lung block and to keep the space **10** protected when it is not necessary to perform manoeuvres on the lung block.

The cover cap **9** is designed to allow the organ housed in the space **10** to be connected to the *ex vivo* perfusion system **2;** in particular, the cover cap **9** comprises connection means, in particular guides **15,** three shown in Figures 1 and 3 and referred to respectively as **15A-15C,** formed in the rear portion **14** and designed to allow the positioning and sliding of connection means, in particular cannulas and a ventilation tube, of the *ex vivo* perfusion system **2** that can be coupled to the organ for performing *ex vivo* perfusion, in particular during the lung block perfusion procedure. The cannulas are connected to the lung block, in particular to the pulmonary artery and left atrium, and the ventilation tube is designed to be connectable to an external mechanical ventilator (not shown), the latter designed to deliver a mixture of gases to the lung block by means of a tube inserted at tracheal carina level. The guides **15** thus act as rails for the positioning and sliding, in relation to the movement of the support surface **11,** of the cannulae and the ventilation tube of the *ex vivo* perfusion system **2.** According to this embodiment, the guides **15A** and **15C** are designed to allow the positioning and sliding of the cannulae and the guide **15B** for the positioning and sliding of the ventilation tube. In addition, the guides **15** are protected by a sheath (not shown) made of polymer material, in particular silicone, designed to allow the space **10** to be separated from the external environment, thus keeping it isolated from external agents and clean, and to create sufficient friction with the cannulae to ensure their stable positioning during the perfusion procedure of the lung block and in relation to the change of position during the movement of the support surface **11** during the aforementioned perfusion procedure.

The cover cap **9** further comprises:
- holes **16** equidistant from each other and formed on the outer surface of the rear portion **14,** in particular arranged parallel to the extension direction of the guides **15** of the cover cap **9,** each hole **16** being associated with a corresponding inclination which can be assumed by the support surface **11;** and
- a stopper element **17** designed to couple with, in particular to be inserted into, corresponding holes **16** so as to maintain the support surface **11** at the corresponding inclination relative to the base **5.**

In particular, in the present embodiment, the holes **16** are arranged in pairs (seven shown in Figures 1-3) along the extension of the guides **15** and the stopper element **17** has two pins designed to fit into a respective pair of holes **16** to maintain the support surface **11** inclined at the desired angle. Therefore, in the present embodiment, the present chamber **1** provides for seven inclined positions that can be assumed by the support surface **11** during the lung block perfusion procedure.

Therefore, the support surface **11** is able to assume different inclinations between the clinostatic position and the orthostatic position thanks to the coupling between the stopper element **17** and the respective holes **16;** in use, an operator is therefore able to change the inclination of the support surface **11** manually by coupling the stopper element **17** to corresponding holes **16,** thereby varying the position of the lung block during perfusion thereof. In this way, it is possible to change the position of the lung block during the perfusion procedure to the orthostatic position. This feature is advantageous in that, in fact, considering that on average a human being spends most of their time in an upright position, the lung block is physiologically optimally perfused when placed in orthostatism; moreover, thanks also to the force of gravity, orthostatism allows for better perfusion of the more apical portions, as well as the basal portions.

In this regard, the Applicant notes that, according to West's anatomo-physiological model (see, for example, John B. West, Andrew M. Luks, *"West's Respiratory Physiology: The Essentials",* Chap. 5), there are three zones subject to a different ventilation/perfusion ratio (also referred to as V/Q below). Assuming that P_{A} denotes alveolar pressure, Pᵥ venous pressure and Pₐ arterial pressure, we have the following:
- first zone, wherein P_{A}>Pₐ>Pᵥ;
- second zone, wherein Pₐ>P_{A}>Pᵥ; and
- third zone, wherein Pₐ>Pᵥ>P_{A}.

Under orthostatic conditions, at the level of the lung block apices, the V/Q ratio is substantially greater than one, i.e. ventilation prevails over perfusion. During the *ex vivo* perfusion of the lung block, orthostatic conditions allow, through the influence of gravity, the perfusion of the mid-basal portions (i.e., of the second and third zones) of the lung block to increase, essentially mimicking *in vivo* physiology. In contrast, the apical portions of the lung block have greater ventilation due to the orthostatic position.

It should also be noted that, during *ex vivo* perfusion, the lung block is substantially placed in the prone position, so as to improve alveolar recruitment (i.e., there is a greater number of alveoli reached by the air entering the lung block) and to reduce the possibility of having pulmonary oedema in the rear portions of the lung block.

Furthermore, when the lung block is in the orthostatic position on the support surface **11,** thanks to the fact that the pulmonary chamber **1** is essentially made of material that is transparent to visible light (e.g. polycarbonate), it is also possible to inspect the dorsal portions, which are normally not visible due to the constant maintenance of the clinostatic position.

The cover cap **9** is provided with additional holes **21** designed to allow for the connection of connection means of the monitoring system **4** for the organ during organ perfusion.

The present device **1** has several advantages.

In particular, the device **1** allows a perfusion procedure to be performed on the lung block carried by the support portion **11** under optimal conditions, as it is possible to position the support portion **11** by inclining it according to different inclinations; it should be noted that the inclination is easily and manually manageable by an operator during the lung block perfusion procedure.

Furthermore, this device **1** allows easy inspection of the organ to be perfused, as well as the possibility of performing in-depth analyses, such as, for example, X-rays, to assess clinical-functional aspects of the organ during the perfusion procedure.

## Claims

1. A device **(1)** for the storage and preservation of an organ to be perfused with an *ex vivo* perfusion system **(2),** the *ex vivo* perfusion system **(2)** comprising a perfusion circuit **(3)** for perfusing the organ that is designed to be connectable to the organ;
wherein the device **(1)** for the storage and preservation comprises:
- a base **(5);**
- a cover element **(9)** couplable to the base **(5),** defining a space **(10)** with the base **(5)** and designed to allow connection of the organ housed in the space **(10)** with the ex *vivo* perfusion system **(2);** and
- a support surface **(11)** housed in the space **(10)** and designed to carry the organ,
wherein the support surface **(11)** is movably carried by the base **(5)** to rotate around an axis **(R)** perpendicular to a longitudinal direction of the support surface **(11)** so that it can be inclined relative to the base **(5).**

2. The device **(1)** for the storage and preservation of an organ to be perfused with an *ex vivo* perfusion system **(2)** according to claim **1,** wherein the support surface **(11)** is designed to be able to be inclined relative to the base **(5)** according to inclinations comprised between 0° and 65° relative to the base **(5).**

3. The device **(1)** for the storage and preservation of an organ to be perfused with an *ex vivo* perfusion system **(2)** according to claim **1** or **2,** wherein the cover element **(9)** comprises a front portion **(13)** and a rear portion **(14)** coupled to one another so that the front portion **(13)** is removable relative to the rear portion **(14),**
and wherein the support surface **(11)** is hinged to the rear portion **(14)** so that it can be inclined relative to the base **(5).**

4. The device **(1)** for the storage and preservation of an organ to be perfused with an *ex vivo* perfusion system **(2)** according to claim **3,** wherein the cover element **(9)** comprises:
- holes **(16)** equidistant from one another and formed on an outer surface of the rear portion **(14),** each hole **(16)** being associated with a corresponding inclination which can be assumed by the support surface **(11);** and
- a stopper element **(17)** designed to couple with corresponding holes **(16)** so as to maintain the support surface **(11)** at the corresponding inclination relative to the base **(5).**

5. The device **(1)** for the storage and preservation of an organ to be perfused with an *ex vivo* perfusion system **(2)** according to any one of the preceding claims, wherein the support surface **(11)** is made of biocompatible and radiotransparent material to allow monitoring of the organ at any step of the *ex vivo* perfusion procedure.

6. The device **(1)** for the storage and preservation of an organ to be perfused with an *ex vivo* perfusion system **(2)** according to any one of claims **3-5,** wherein the cover element **(9)** further comprises:
- guides **(15; 15A-15C)** formed in the rear portion **(14)** and designed to allow positioning and sliding of connection means of the *ex vivo* perfusion system **(2)** couplable to the organ for performing the *ex vivo* perfusion; and
- further holes designed to allow connection of connection means of a monitoring system **(4),** connectable to the device **(1),** for the organ during the perfusion of the organ itself.

7. An arrangement comprising:
- a device **(1)** for the storage and preservation of an organ to be perfused with an *ex vivo* perfusion system **(2)** according to any one of the preceding claims; and
- an *ex vivo* perfusion system (2) comprising a perfusion circuit **(3)** for perfusing the organ that is designed to be connectable to the organ, the *ex vivo* perfusion system (2) being coupled to the device **(1)** for containing and preserving an organ to be perfused with the *ex vivo* perfusion system **(2).**

## Patentansprüche

1. Vorrichtung **(1)** zur Lagerung und Erhaltung eines mit einem Ex-vivo-Perfusionssystem **(2)** zu perfundierenden Organs, wobei das Ex-vivo-Perfusionssystem **(2)** einen Perfusionskreislauf **(3)** zur Perfusion des Organs umfasst, der ausgestaltet ist, um mit dem Organ verbindbar zu sein,
wobei die Vorrichtung **(1)** zur Lagerung und Erhaltung Folgendes umfasst:
- eine Basis **(5);**
- ein Abdeckelement **(9),** das mit der Basis **(5)** koppelbar ist, das mit der Basis **(5)** einen Raum **(10)** definiert und ausgestaltet ist, um die Verbindung des in dem Raum **(10)** untergebrachten Organs mit dem Ex-vivo-Perfusionssystem **(2)** zu erlauben, und
- eine Stützoberfläche **(11),** die in dem Raum **(10)** untergebracht und ausgestaltet ist, um das Organ zu tragen,
wobei die Stützoberfläche **(11)** von der Basis **(5)** bewegbar getragen wird, um sich um eine Achse **(R)** senkrecht zu einer Längsrichtung der Stützoberfläche **(11)** zu drehen, sodass sie relativ zu der Basis **(5)** geneigt werden kann.

2. Vorrichtung **(1)** zur Lagerung und Erhaltung eines mit einem Ex-vivo-Perfusionssystem **(2)** zu perfundierenden Organs nach Anspruch **1,** wobei die Stützoberfläche **(11)** ausgestaltet ist, um in der Lage zu sein, relativ zu der Basis **(5)** gemäß Neigungen zwischen 0° und 65° relativ zu der Basis **(5)** geneigt zu werden.

3. Vorrichtung **(1)** zur Lagerung und Erhaltung eines mit einem Ex-vivo-Perfusionssystem **(2)** zu perfundierenden Organs nach Anspruch **1 oder 2,** wobei das Abdeckelement **(9)** einen vorderen Abschnitt **(13)** und einen hinteren Abschnitt **(14)** umfasst, die so miteinander gekoppelt sind, dass der vordere Abschnitt **(13)** relativ zu dem hinteren Abschnitt **(14)** abnehmbar ist,
und wobei die Stützoberfläche **(11)** an dem hinteren Abschnitt **(14)** angelenkt ist, sodass sie relativ zu der Basis **(5)** geneigt werden kann.

4. Vorrichtung **(1)** zur Lagerung und Erhaltung eines mit einem Ex-vivo-Perfusionssystem **(2)** zu perfundierenden Organs nach Anspruch **3,** wobei das Abdeckelement **(9)** Folgendes umfasst:
- Löcher **(16),** die in gleichem Abstand voneinander und auf einer äußeren Oberfläche des hinteren Abschnitts **(14)** ausgebildet sind, wobei jedes Loch **(16)** einer entsprechenden Neigung zugeordnet ist, die von der Stützoberfläche **(11)** eingenommen werden kann, und
- ein Arretierelement **(17),** das so ausgestaltet ist, dass es sich mit entsprechenden Löchern **(16)** koppelt, um die Stützoberfläche **(11)** in der entsprechenden Neigung relativ zu der Basis **(5)** beizubehalten.

5. Vorrichtung **(1)** zur Lagerung und Erhaltung eines mit einem Ex-vivo-Perfusionssystem **(2)** zu perfundierenden Organs nach einem der vorhergehenden Ansprüche, wobei die Stützoberfläche **(11)** aus biokompatiblem und strahlentransparentem Material besteht, um die Überwachung des Organs in jedem Schritt des Ex-vivo-Perfusionsverfahrens zu ermöglichen.

6. Vorrichtung **(1)** zur Lagerung und Erhaltung eines mit einem Ex-vivo-Perfusionssystem **(2)** zu perfundierenden Organs nach einem der Ansprüche **3-5,** wobei das Abdeckelement **(9)** ferner Folgendes umfasst:
- Führungen **(15; 15A-15C),** die in dem hinteren Abschnitt **(14)** ausgebildet und ausgestaltet sind, um das Positionieren und Verschieben von Verbindungsmitteln des Ex-vivo-Perfusionssystems **(2)** zu ermöglichen, die mit dem Organ koppelbar sind, um die Ex-vivo-Perfusion durchzuführen, und
- weitere Löcher, die ausgestaltet sind, um die Verbindung von Verbindungsmitteln eines Überwachungssystems **(4),** das mit der Vorrichtung **(1)** verbindbar ist, für das Organ während der Perfusion des Organs zu ermöglichen.

7. Anordnung, umfassend:
- eine Vorrichtung **(1)** zur Lagerung und Erhaltung eines mit einem Ex-vivo-Perfusionssystem **(2)** zu perfundierenden Organs nach einem der vorhergehenden Ansprüche und
- ein Ex-vivo-Perfusionssystem **(2),** das einen Perfusionskreislauf **(3)** zur Perfusion des Organs umfasst, der ausgestaltet ist, um mit dem Organ verbindbar zu sein, wobei das Ex-vivo-Perfusionssystem **(2)** mit der Vorrichtung **(1)** gekoppelt ist, um ein mit dem Ex-vivo-Perfusionssystem **(2)** zu perfundierendes Organ zu enthalten und zu erhalten.

## Revendications

1. Dispositif **(1)** de stockage et de conservation d'un organe à perfuser avec un système de perfusion *ex vivo* **(2),** le système de perfusion ex *vivo* **(2)** comprenant un circuit de perfusion **(3)** pour perfuser l'organe qui est conçu pour être relié à l'organe ;
le dispositif **(1)** de stockage et de conservation comprenant :
- une base **(5),**
- un élément de recouvrement **(9)** pouvant être couplé à la base **(5),** définissant un espace **(10)** avec la base **(5)** et conçu pour permettre le raccordement de l'organe logé dans l'espace **(10)** avec le système de perfusion *ex vivo* **(2);** et
- une surface de support **(11)** logée dans l'espace **(10)** et conçue pour porter l'organe,
la surface de support **(11)** étant portée de manière mobile par la base **(5)** pour tourner autour d'un axe **(R)** perpendiculaire à une direction longitudinale de la surface de support **(11)** de sorte qu'elle puisse être inclinée par rapport à la base **(5)** .

2. Dispositif **(1)** de stockage et de conservation d'un organe à perfuser avec un système de perfusion *ex vivo* **(2)** selon la revendication **1,** la surface de support **(11)** étant conçue pour pouvoir être inclinée par rapport à la base **(5)** selon des inclinaisons comprises entre 0 et 65° par rapport à la base **(5).**

3. Dispositif **(1)** de stockage et de conservation d'un organe à perfuser avec un système de perfusion *ex vivo* **(2)** selon la revendication **1 ou 2,** l'élément de recouvrement **(9)** comprenant une partie avant **(13)** et une partie arrière **(14)** couplées l'une à l'autre de sorte que la partie avant **(13)** est amovible par rapport à la partie arrière **(14),**
et la surface de support **(11)** étant articulée à la partie arrière **(14)** de manière à pouvoir être inclinée par rapport à la base **(5).**

4. Dispositif **(1)** de stockage et de conservation d'un organe à perfuser avec un système de perfusion *ex vivo* **(2)** selon la revendication **3,** l'élément de recouvrement **(9)** comprenant :
- des trous **(16)** équidistants les uns des autres et formés sur une surface extérieure de la partie arrière **(14),** chaque trou **(16)** étant associé à une inclinaison correspondante qui peut être adoptée par la surface de support **(11)** ; et
- un élément d'arrêt **(17)** conçu pour s'accoupler à des trous correspondants **(16)** de manière à maintenir la surface de support **(11)** à l'inclinaison correspondante par rapport à la base **(5).**

5. Dispositif **(1)** de stockage et de conservation d'un organe à perfuser avec un système de perfusion *ex vivo* **(2)** selon l'une quelconque des revendications précédentes, la surface de support **(11)** étant constituée d'un matériau biocompatible et radiotransparent pour permettre la surveillance de l'organe à n'importe quelle étape de la procédure de perfusion *ex vivo .*

6. Dispositif **(1)** de stockage et de conservation d'un organe à perfuser avec un système de perfusion *ex vivo* **(2)** selon l'une des revendications **3-5,** l'élément de recouvrement **(9)** comprenant en outre :
- des guides **(15** ; **15A-15C)** formés dans la partie arrière **(14)** et conçus pour permettre le positionnement et le coulissement de moyens de raccordement du système de perfusion *ex vivo* **(2)** pouvant être couplés à l'organe pour effectuer la perfusion *ex vivo ;* et
- des trous supplémentaires conçus pour permettre le raccordement des moyens de raccordement d'un système de surveillance **(4),** pouvant être relié au dispositif **(1),** pour l'organe pendant la perfusion de ce dernier.

7. Disposition comprenant :
- un dispositif **(1)** de stockage et de conservation d'un organe à perfuser avec un système de perfusion *ex vivo* **(2)** selon l'une quelconque des revendications précédentes ; et
- un système de perfusion ex *vivo* **(2)** comprenant un circuit de perfusion **(3)** pour perfuser l'organe qui est conçu pour être relié à l'organe, le système de perfusion *ex vivo* **(2)** étant couplé au dispositif **(1)** pour contenir et conserver un organe à perfuser avec le système de perfusion *ex vivo* **(2).**
